Europäisches Patentamt

European Patent Office

Office européen des brevets

(19)

(11) Veröffentlichungsnummer: **0 036 599**
**B1**

(12) # EUROPÄISCHE PATENTSCHRIFT

(45) Veröffentlichungstag der Patentschrift:
18.07.84

(21) Anmeldenummer: 81101931.4

(22) Anmeldetag: 16.03.81

(51) Int. Cl.³: **C 02 F 1/78,** B 01 J 10/00,
B 01 F 3/04

(54) **Verfahren und Vorrichtung zur Absorption von Ozon.**

(30) Priorität: 26.03.80 DE 3011615

(43) Veröffentlichungstag der Anmeldung:
30.09.81 Patentblatt 81/39

(45) Bekanntmachung des Hinweises auf die Patenterteilung:
18.07.84 Patentblatt 84/29

(84) Benannte Vertragsstaaten:
AT BE CH DE FR GB IT LI NL

(56) Entgegenhaltungen:
AT - B - 324 964
DE - A - 2 120 875
DE - A - 2 203 317
DE - A - 2 734 453
DE - A - 2 833 190
US - A - 996 561

(73) Patentinhaber: HOECHST AKTIENGESELLSCHAFT,
Postfach 80 03 20, D-6230 Frankfurt am Main 80 (DE)

(72) Erfinder: Herbrechtsmeier, Peter, Dr., Berliner
Strasse 10, D-6238 Hofheim am Taunus (DE)
Erfinder: Greiner, Günter, Dr., Wachenheimer
Strasse 47, D-6237 Liederbach (DE)
Erfinder: Grünbein, Wolfgang, Dr.,
Alt-Oberliederbach 35, D-6237 Liederbach (DE)
Erfinder: Nix, Norbert, Dr., Bienerstrasse 26,
D-6238 Hofheim am Taunus (DE)
Erfinder: Schäfer, Hans, Am Rehsteig 15, D-6232 Bad
Soden am Taunus (DE)
Erfinder: Wendel, Wolfgang, Dr., An der Dornheck 12,
D-6233 Kelkheim (Taunus) (DE)

## Beschreibung

Ozon wird häufig in der Wasseraufbereitung zum Abbau organischer Verunreinigungen benutzt. Der Ozon-Eintrag erfolgt dabei in verschiedenartigen Gas/Flüssig-Kontaktapparaturen. So werden hierzu beispielsweise Blasensäulen, mechanisch gerührte Becken, Strahlendüsen sowie Füllkörperkolonnen eingesetzt. Bei der Verwendung von Blasensäulen wird das ozonhaltige Gas sowohl durch statische Begaser in die Flüssigkeit eingebracht als auch in schnell strömenden Flüssigkeiten über ein Einleitungsrohr zum Fuß der Blasensäule geführt, wobei in dem Gaszuleitungsrohr die Verweilzeit der Gasblasen nur kurz gegenüber ihrer Aufstiegszeit in der Blasensäule ist.

Zur Erzielung eines ausreichenden Ozon-Absorptionsgrades benötigen die bekannten Absorber jedoch eine beträchtliche Bauhöhe bzw. ein beachtliches Bauvolumen und neigen auch zur Gaspolsterbildung am Absorberkopf.

Aus der Deutschen Offenlegungsschrift 2 120 875 war schon ein Verfahren und eine Vorrichtung zum Belüften einer Flüssigkeit bekannt, wobei das z. B. sauerstoffhaltige Gas mit Wasser in einer trichterförmigen Vorrichtung im Gleichstrom von oben nach unten geführt wird. Eine einheitliche Abströmgeschwindigkeit des Wassers läßt sich mit dieser Vorrichtung nicht erreichen, mit der Folge eines breiten Verweilzeitspektrums. Dies wiederum bedingt eine im Mittel kürzere Gasverweilzeit.

Das Problem der Gaspolsterbildung am oberen Ende des Absorbers, das höchst unerwünschte Wirkungen zur Folge hat (u. a. Leerdrücken des Absorbers), ist in dieser Literaturstelle nicht angesprochen und läßt sich mit den hierin offenbarten Ausgestaltungsformen des Absorbers auch nicht lösen. Naturgemäß gibt diese Literaturstelle auch keine diesbezüglichen Anregungen.

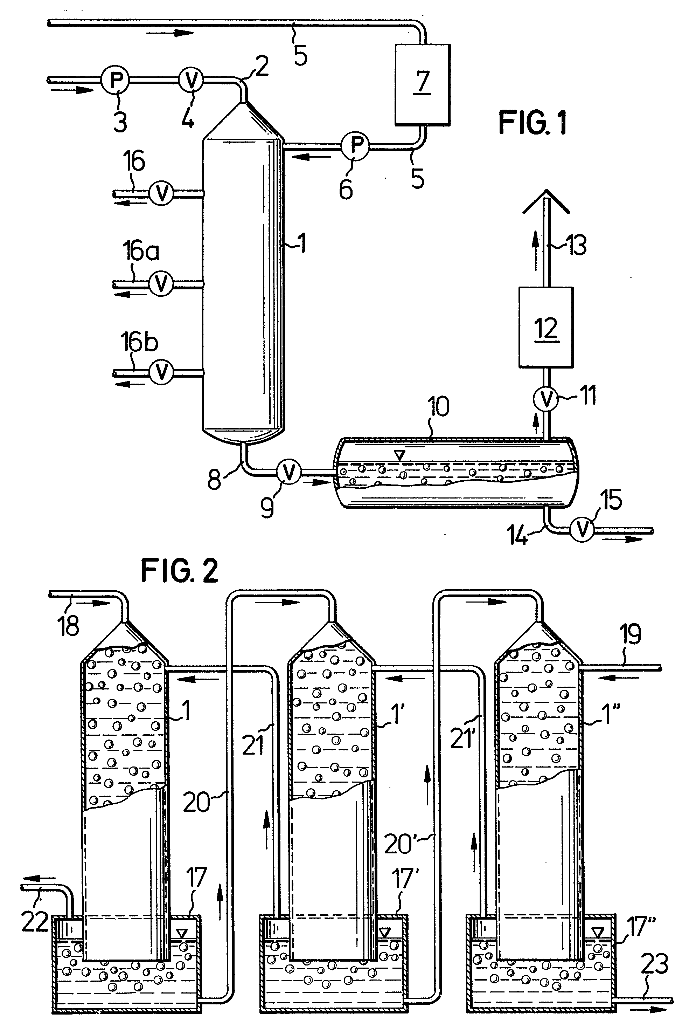

Dies gilt auch für die DE-Offenlegungsschrift 2 734 453 und die US-Patentschrift 996 561. Letztere betrifft ein Verfahren zur Absorption von Ozon in Wasser, wobei das ozonhaltige Gas und das Wasser innerhalb der Absorbersäule im Gleichstrom von oben nach unten transportiert werden. Zwar konvergiert das obere kugelförmige Ende der in Fig. 1 der US-Patentschrift dargestellten Absorbersäule wegen der hier erfolgenden Eindosierung des Wassers zufälligerweise in gewissem Umfang. Jedoch läßt sich hierdurch eine Gaspolsterbildung nicht sicher ausschließen, abgesehen davon, daß diese mehr zufällige Ausgestaltung keine Erwähnung in der Beschreibung findet, das Problem der Gaspolsterbildung überhaupt nicht angesprochen und dem Fachmann damit keine nacharbeitbare Lehre an die Hand gegeben wird. Im übrigen besitzt der hierin beschriebene Absorber eine Erweiterung unterhalb der Gaseinlaßvorrichtung (vgl. diese Fig. 1). Dadurch, daß die Flüssigkeitsgeschwindigkeit am erweiterten Endpunkt des Absorbers gerade noch zum Abwärtsstrom der Gasblasen ausreichen muß, liegt die Flüssigkeitsgeschwindigkeit im darüberliegenden engeren Absorberteil zwangsläufig deutlich höher. Somit kann im Mittel nur eine ziemlich geringe Gasverweilzeit erzielt werden.

Aufgabe der vorliegenden Erfindung war es daher, die Nachteile des Standes der Technik zu überwinden und insbesondere ein entsprechendes Verfahren und eine Vorrichtung bereitzustellen, wodurch die nachteilige Gaspolsterbildung am Absorberkopf ganz oder zumindest überwiegend vermieden wird.

Die Erfindung betrifft daher ein Verfahren zur Absorption von Ozon in Wasser durch Einleiten eines ozonhaltigen Gases in einen Wasserstrom, der in einem Absorber abwärts fließt, wobei das ozonhaltige Gas am oberen Ende des zylindrischen Absorbers in den Wasserstrom blasenförmig und unabhängig von Wasserstrom eingebracht und in diesem, entgegengesetzt zu seiner Auftriebsrichtung, nach unten zum Absorberaustritt transportiert wird, dadurch gekennzeichnet, daß der eingesetzte Absorber am oberen Ende spitz zuläuft.

Ein weiterer Gegenstand der Erfindung ist eine Vorrichtung zur Durchführung dieses Verfahrens, bestehend im wesentlichen aus einem zylindrischen, zumindestens am oberen Ende geschlossenen Absorberkörpers und Einlaßvorrichtungen am oberen Ende des Absorberkörpers für das ozonhaltige Gas und für das Wasser sowie mindestens einer Auslaßvorrichtung am unteren Ende des Absorberkörpers für das ozonhaltige Wasser sowie für das nicht absorbierte Gas, wobei zwischen dem unteren Ende des Absorberkörpers und der Auslaßvorrichtung gegebenenfalls ein Phasenseparator zwischengeschaltet sein kann, dadurch gekennzeichnet, daß der Absorberkörper am oberen Ende spitz zuläuft.

Das erfindungsgemäße Verfahren wird also in der Weise durchgeführt, daß das ozonhaltige Gas und das Wasser in dem Absorber im Gleichstrom von oben nach unten geführt werden.

Die Begasung, d. h. die Eindosierung des ozonhaltigen Gases in die vorzugsweise vertikal abwärtsströmende Flüssigkeit erfolgt am oberen Ende des Absorbers in der Nähe des Absorberkopfes, um auf diese Weise möglichst die gesamte Absorberlänge auszunutzen. Vorzugsweise findet diese Begasung 0 bis 20%, bezogen auf die gesamte Absorberhöhe, unterhalb des Absorberkopfes durch hierfür geeignete Vorrichtungen statt. Beispielsweise seien hierzu genannt: Lochplatten, die vorzugsweise radial zum Absorberumfang angeordnet sind; weiterhin Sinterplatten, Zweistoffdüsen etc. Der Lochdurchmesser dieser Begasungsvorrichtungen, der von Einfluß auf den mittleren Blasendurchmesser des abwärtsgeförderten Gases ist, liegt in der Regel unterhalb von 2 mm, vorzugsweise zwischen 0,1 mm und 1 mm. Daneben spielen für den mittleren Blasendurchmesser die Strömungsgeschwindigkeit der Flüssigkeit (sog. Leerrohrgeschwindigkeit) sowie die Oberflächenspannung und die Viskosität der Flüssigkeit eine Rolle. Um möglichst geringe Absorberlängen zu ermöglichen, sollte der mittlere Blasendurchmesser im allgemeinen 10 mm nicht überschreiten. Vorzugsweise liegt er zwischen 0,2 mm und 6 mm. Dabei ist zu berücksichtigen, daß größere Blasen eine größere Aufstiegsgeschwindigkeit besitzen als kleinere Blasen, wodurch die Regelbarkeit des Systems bei einem breiten Blasengrößenspektrum geringer wird.

Die Leerrohrgeschwindigkeit bestimmt die Gasverweilzeit im Absorber und wird zur Erzielung einer möglichst kurzen Absorberstrecke zweckmäßigerweise auf Werte von unterhalb 2 m/s eingestellt. Vorzugsweise liegt sie jedoch unterhalb von 0,6 m/s und ganz besonders bevorzugt sind Leerrohrgeschwindigkeiten von 0,5 m/sec bis 0,2 m/sec. Die theoretisch mögliche untere Grenze liegt dort, wo die Abstromgeschwindigkeit der Flüssigkeit und die Aufstiegsgeschwindigkeit der Blasen gleich ist und sich ein Schwebezustand der Glasblasen ausbildet. Dieser Wert liegt — in Abhängigkeit von der Blasengrößenverteilung, der Zusammensetzung des Gases, der Temperatur der Flüssigkeit und des Dichteverhältnisses Gas/Flüssigkeit — für reines Wasser und Sauerstoff bei etwa 0,18 m/s.

Die mittlere Verweilzeit des ozonhaltigen Gases im Absorber beträgt im allgemeinen etwa 60 s bis 0,2 s, vorzugsweise 0,5 s bis 20 s pro m Absorberlänge.

Eine wesentliche Verlängerung der angegebenen Verweilzeiten bringt keine Vorteile und geht zu Lasten des Gasdurchsatzes.

Das Volumenverhältnis von Flüssigkeit zu ozonhaltigem Gas liegt in der Regel bei größer als 4 : 1, vorzugsweise größer als 6 : 1. Besonders günstige Ergebnisse werden bei einem Volumenverhältnis im Bereich von 7 : 1 bis 15 : 1 erhalten. Allgemein steigt der Absorptionsgrad mit steigendem Volumenverhältnis von Flüssigkeit zu Gas an.

Grundsätzlich sind auch kleinere Verhältnisse als 4 : 1 möglich, jedoch wächst dann die Gefahr der Bildung von Großblasen und des damit verbundenen Entstehens eines Gaspolsters am Absorberkopf. Durch diese Gaspolsterbildung kann der Absorber leergedrückt werden.

Das erfindungsgemäße Verfahren kann bei Normaldruck durchgeführt werden. Zur Erhöhung des Absorptionsgrades ist es jedoch vorteilhaft, unter erhöhtem Druck, beispielsweise bei bis zu 15 bar, vorzugsweise bei 4 bar bis 7 bar zu arbeiten.

Die Erzeugung des ozonhaltigen Gases erfolgt nach bekannten Verfahren in den hierfür üblichen Apparaturen unter Verwendung von Luft bzw. Stickstoff-/Sauerstoff-Mischungen beliebiger Konzentration oder von reinem Sauerstoff. Letzteres bietet u. a. den Vorteil, daß durch Erzielung einer höheren Ozon-Konzentration die Einstellung eines günstigeren Gas-/Flüssigkeitsverhältnisses im Absorber möglich ist.

Zur Durchführung des erfindungsgemäßen Verfahrens wird ein zylindrischer Absorber gemäß Anspruch 5 eingesetzt, dessen oberes Ende also spitz (kegelförmig) zuläuft. Durch diese spezielle Formgebung wird in überraschend einfacher Weise das Entstehen eines Gaspolsters vermieden. Die Neigung der Spitze (des Kegels) ist dabei nicht kritisch; im allgemeinen beträgt der Winkel zwischen den die Spitze (den Kegel) bildenden Wandungen 4 bis 20°, vorzugsweise 6 bis 10°.

Mittels einer Pumpe kann die in dem ggf. vorhandenen Phasenseparator von den nicht absorbiertem Gas befreite Flüssigkeit wieder zum Absorberkopf zurückgeführt werden. Gleiches gilt auch für das nicht absorbierte, ggf. erneut mit Ozon beladene Gas.

Als Material für die erfindungsgemäße Vorrichtung dienen ozonbeständige Stoffe, vorzugsweise Glas oder Edelstahl.

Die Höhe und die Nennweite des zylindrischen Absorberteils sind nicht kritisch und können sich grundsätzlich in weiten Grenzen bewegen. Im allgemeinen wird man Absorber bevorzugen, bei denen das Verhältnis von Höhe zu Nennweite größer als 1, vorzugsweise größer als 3 ist. Es hat sich dabei auch gezeigt, daß beispielsweise bei einer Nennweite von 0,30 m eine Säulenhöhe von 2 m zur Gewährleistung eines hohen Absorptionsgrades ausreicht und daß selbst eine Säulenhöhe von nur 0,3 bis 0,5 m fast schon ein gleich gutes Ergebnis bringt.

Zur Erhöhung des Ozon-Absorptionsgrades können selbstverständlich auch mehrere Abstromreaktor-Einheiten hintereinandergeschaltet werden (vgl. hierzu die Fig. 2). Auch kann es von Vorteil sein, das den Absorber verlassende Gas in bekannter Weise wieder zum Ozonerzeuger zurückzuführen und nach erneuter Beladung mit Ozon wieder für die Absorption einzusetzen.

Das nach dem erfindungsgemäßen Verfahren erhältliche ozonreiche Wasser kann in vielfältiger Weise Anwendung finden, beispielsweise zur Trinkwasseraufbereitung oder zur Abwasserreinigung. Besonders vorteilhaft ist dabei eine Verfahrensweise, wie sie in der DE-A-2 556 328 beschrieben ist, wo nur ein Teilstrom des zu behandelnden Wassers unter erhöhtem Druck mit Ozon beladen wird, der dem Hauptwasserstrom bei Normaldruck dann wieder zugemischt wird. Die in dieser DE-A für diesen Zweck beschriebene Füllkörperkolonne wäre also durch den erfindungsgemäßen Abstrom-Absorber zu ersetzen und dementsprechend wäre das ozonhaltige Gas am Absorberkopf einzuspeisen.

Es ist aber auch möglich, die Gesamtmenge des zu behandelnden Wassers dem Abstrom-Absorber zuzuführen. Zur Verbesserung des Absorptionsgrades kann dabei die Gesamtlänge des Absorbers so gewählt werden, daß die Verweilzeit der flüssigen Phase hinreichend groß ist, um eine nachfolgende chemische Reaktion wirksam werden zu lassen. Damit kann die Ozonabsorption und die sonst üblicherweise in einem nachgeschalteten Verweilzeitbehälter ablaufende Reaktion des absorbierten Ozons mit den Wasserinhaltsstoffen integriert in dem Abstromabsorber durchgeführt werden.

Die anliegenden Fig. 1 und 2 veranschaulichen in beispielhafter Weise das erfindungsgemäße Verfahren und die erfindungsgemäße Vorrichtung.

**0 036 599**

Fig. 1 gibt dabei in schematischer Weise eine mögliche Versuchsanordnung wieder. (1) bedeutet dabei den säulenförmigen Absorber mit kegelförmiger Ausbildung des Kopfes. (2) stellt den Einlaß für das Wasser, (3) eine Pumpe und (4) ein Ventil dar. Über die Leitung (5) wird das ozonhaltige Gas eindosiert, das über eine Pumpe (6) von dem Ozongenerator (7) gefördert wird. Der Absorber ist ferner mit einem Auslaß (8) für das ozonhaltige Wasser und das nicht absorbierte Gas versehen, der über das Ventil (9) zum Verweilzeitbehälter (10) führt, in dem eine Trennung von Flüssig- und Gasphase erfolgt. Von dort führt eine Leitung über das Ventil (11), den Ozonvernichter (12) und den Auslaß (13) ins Freie. Über die Leitung (14) und das Ventil (15) verläßt die ausreagierte Flüssigkeit den Verweilzeitbehälter. (16), (16a), und (16b) stellen Auslaßöffnungen zur Probenentnahme dar.

Fig. 2 zeigt eine Apparatur zur mehrstufigen Absorption von Ozon, bestehend aus mehreren Absorbern (1), (1') und (1'') mit kegelförmigem Absorberkopf. (17), (17') und (17'') bedeuten jeweils Behälter, die als Gas-Flüssigkeitsseparatoren dienen. Über (18) wird das Frischwasser und über (19) das ozonhaltige Gas zugeführt. (20) und (20') bzw. (21) und (21') stellen die entsprechenden Verbindungsleitungen zwischen den einzelnen Absorbern für das ozonhaltige Wasser bzw. das nicht absorbierte Gas dar, das bei (22) entweicht. Das mit Ozon beladene Wasser wird bei (23) entnommen. Gegebenenfalls können bei (22) und/oder (23) weitere Absorber angeschlossen werden.

### Beispiel

Der benutzte Absorber bestand aus einer, oben mit einem Winkel von 10° kegelförmig zulaufenden Edelstahlsäule von 0,3 m Innendurchmesser und 3 m Länge; der Abstand zwischen Begasungsstelle und Probenentnahme betrug 2 m. Das zu absorbierende Ozon wurde aus reinem Sauerstoff in einem üblichen Ozongenerator hergestellt und das resultierende Ozon/Sauerstoff-Gemisch über ein Wasserringkompressor dem Absorberkopf zugeführt. Als Begasungsvorrichtung dienten vier radial angeordnete Lochplatten; die Zahl der Löcher pro Platte betrug 128, der Lochdurchmesser 0,5 mm und der Abstand der Lochplatten von der Säulenspitze 0,8 m. Die Zufuhr des Wassers erfolgte über eine Pumpe an der Spitze der Säule; der Druck des aufgegebenen Wassers wurde dem Druck des ozonhaltigen Gases entsprechend angepaßt. Die Wassertemperatur lag bei 15° C. Bei einer Leerrohrgeschwindigkeit von 0,3 m/s stellte sich alsbald stationär ein mittlerer Blasendurchmesser von etwa 4 mm ein.

Weitere Einzelheiten hinsichtlich der Verfahrensführung und des erhaltenen Absorptionsgrades sind aus der nachfolgenden Tabelle ersichtlich.

| Versuch | Druck (absolut) | $O_3$-Eingangs-konz.*) | Gasdurchsatz (Betriebszustand) | Wasserdurch-satz | Absorp-tionsgrad |
|---|---|---|---|---|---|
| 1 | 1,4 bar | 73 g/m³ | 10,7 m³/h | 65 m³/h | 80% |
| 2 | 3,0 bar | 73 g/m³ | 5,5 m³/h | 51 m³/h | 85% |
| 3 | 6,0 bar | 48 g/m³ | 7,3 m³/h | 86 m³/h | 86% |
| 4 | 6,0 bar | 46 g/m³ | 4,7 m³/h | 70 m³/h | 89% |
| 5 | 6,0 bar | 49 g/m³ | 3,3 m³/h | 70 m³/h | 96% |

*) bei Gasvolumen im Normalzustand

Es zeigte sich dabei, daß unter gleichen Bedingungen auch bereits bei 0,5 m Länge der Säule ein nahezu gleichgroßer Absorptionsgrad feststellbar war.

Der Absorptionsgrad $\varphi$ wurde dabei aufgrund folgender Beziehung bestimmt:

$$\varphi O_3 = \frac{n_E - n_A}{n_E}$$

mit

$n_E$ = Molzahl $O_3$ im Einsatzgas vor der Kolonne

$n_A$ = Molzahl $O_3$ im Austrittsgas nach der Kolonne.

Auch nach achtstündigem Lauf war keine Gaspolsterbildung am Säulenkopf zu beobachten gewesen.

4

**Patentansprüche**

1. Verfahren zur Absorption von Ozon in Wasser durch Einleiten eines ozonhaltigen Gases in einen Wasserstrom, der in einem Absorber abwärts fließt, wobei das ozonhaltige Gas am oberen Ende des zylindrischen Absorbers in den Wasserstrom blasenförmig und unabhängig von Wasserstrom eingebracht und in diesem, entgegengesetzt zu seiner Auftriebsrichtung, nach unten zum Absorberaustritt transportiert wird, dadurch gekennzeichnet, daß der eingesetzte Absorber am oberen Ende spitz zuläuft.

2. Verfahren nach Anspruch 1, dadurch gekennzeichnet, daß die Geschwindigkeit des abwärts fließenden Flüssigkeitsstroms weniger als 0,6 m/s beträgt.

3. Verfahren nach Anspruch 1 und 2, dadurch gekennzeichnet, daß die Absorption unter erhöhtem Druck bis zu 7 bar durchgeführt wird.

4. Vorrichtung zur Durchführung des Verfahrens gemäß Anspruch 1 bis 3, bestehend im wesentlichen aus einem zylindrischen, zumindestens am oberen Ende geschlossenen Absorberkörper und Einlaßvorrichtungen am oberen Ende des Absorberkörpers für das ozonhaltige Gas und für das Wasser sowie mindestens einer Auslaßvorrichtung am unteren Ende des Absorberkörpers für das ozonhaltige Wasser sowie für das nicht absorbierte Gas, wobei zwischen dem unteren Ende des Absorberkörpers und der Auslaßvorrichtung gegebenenfalls ein Phasenseparator zwischengeschaltet sein kann, dadurch gekennzeichnet, daß der Absorberkörper am oberen Ende spitz zuläuft.

5. Vorrichtung nach Anspruch 4, dadurch gekennzeichnet, daß mehrere aus dem Absorberkörper und dem Phasenseparator bestehende Absorber hintereinandergeschaltet sind, wobei zur Ermöglichung eines Gegenstroms der Gasauslaß des Phasenseparators des zweiten und jedes weiteren Absorbers mit dem Gaseinlaß des jeweils vorhergehenden Absorbers und der Flüssigkeitsauslaß jedes Phasenseparators mit dem Flüssigkeitseinlaß des nachfolgenden Absorbers über eine Rohrleitung verbunden ist.

**Claims**

1. A process for absorbing ozone in water by introducing an ozone-containing gas into a water current streaming downward in an absorber, the ozone-containing gas being introduced into the stream of water in the form of bubbles and independent of the stream of water at the upper end of the absorber and passing it downward to the absorber outlet in a direction opposed to its ascending direction, caracterized that the top of the absorber used in the process is pointed.

2. The process of claim 1, wherein the velocity of the flow of liquid streaming downward is less than 0.6 m/sec.

3. The process of any of claims 1 or 2, wherein the absorption is carried out under an elevated pressure amounting up to 7 bar.

4. A device for carrying out the process of any of claims 1 to 3, consisting substantially of a cylindrical absorber part closed at least at the top, inlet means at the upper part of the absorber for the ozone-containing gas and for the water and at least one outlet at the bottom part of the absorber for the ozone-containing water and for the gas that has not been absorbed, a phase separator being optionally mounted at a level between the lower part of the absorber and the outlet, wherein the top of the absorber is pointed.

5. The device of claim 4, wherein several absorbers, consisting of the absorber part and the phase separator are series-connected, wherein in order to allow counter-current flow the gas outlet of the phase separator of the second and each further absorber is connected with the gas inlet of each preceding absorber via a pipe and in the same way the liquid outlet of each phase separator with the liquid inlet of the following absorber.

**Revendications**

1. Procédé pour l'absorption d'ozone dans l'eau par introduction d'un gaz contenant de l'ozone dans un courant d'eau s'écoulant vers le bas dans un absorbeur, le gaz contenant de l'ozone étant introduit dans le courant d'eau à l'extrémité supérieure de l'absorbeur cylindrique, sous la forme de bulles et indépendamment du courant d'eau, et étant transporté dans ce dernier, à contre-courant par rapport à la direction de sa force ascensionnelle, vers le bas vers la sortie de l'absorbeur, caractérisé en ce que l'absorbeur utilisé se termine en pointe à sa partie supérieure.

2. Procédé selon la revendication 1, caractérisé en ce que la vitesse du courant de liquide s'écoulant vers le bas est inférieure à 0,6 m/s.

3. Procédé selon la revendication 1 ou 2, caractérisé en ce que l'absorption est réalisée sous pression élevée, jusqu'à 7 bar.

4. Appareillage pour la mise en œuvre du procédé selon la revendication 1 à 3, comprenant essentiellement un corps d'absorbeur cylindrique, fermé au moins en son extrémité supérieure, et des

**0 036 599**

dispositifs d'entrée à l'extrémité supérieure du corps de l'absorbeur pour le gaz contenant l'ozone et pour l'eau, ainsi qu'au moins un dispositif de sortie à l'extrémité inférieure du corps d'absorbeur pour l'eau contenant de l'ozone et pour le gaz non-absorbé, un séparateur de phase pouvant éventuellement être intercalé entre l'extrémité inférieure du corps d'absorbeur et le dispositif de sortie, caractérisé en ce que le corps d'absorbeur se termine en pointe en son extrémité supérieure.

5. Appareillage selon la revendication 4, caractérisé en ce que plusieurs absorbeurs, composés du corps d'absorbeur et du séparateur de phases, sont placés les uns en aval des autres, tandis que, pour permettre l'existence d'un contrecourant, l'orifice de sortie du gaz du séparateur de phases du deuxième absorbeur, puis d'un absorbeur sur deux, est relié par l'intermédiaire d'une tuyauterie à l'orifice d'entrée du gaz de l'absorbeur chaque fois précédent, et que l'orifice de sortie du liquide de chaque séparateur de phases est relié par l'intermédiaire d'une tuyauterie à l'orifice d'entrée du liquide de l'absorbeur suivant.

0 036 599

FIG. 1

FIG. 2

7